# EUROPEAN PATENT SPECIFICATION

(11) **EP 3 680 043 B1**
(45) Date of publication and mention of the grant of the patent: **22.12.2021**
(21) Application number: 18852954.9
(22) Date of filing: 08.08.2018
(51) Int. Cl.: B22F 10/20, C22C 19/05, B33Y 70/00, B22F 1/00, C22C 1/04

(54) **NI-BASED CORROSION-RESISTANT ALLOY POWDER FOR ADDITIVE MANUFACTURING, AND METHOD FOR PRODUCING AN ADDITIVE MANUFACTURING PRODUCT**
NI-BASIERTES KORROSIONSBESTÄNDIGES LEGIERUNGSPULVER FÜR DIE ADDITIVE FERTIGUNG UND VERFAHREN ZUR HERSTELLUNG EINES MITTELS ADDITIVEM HERSTELLUNGSVERFAHREN GEFERTIGTEN PRODUKTS
POUDRE D'ALLIAGE RÉSISTANT À LA CORROSION À BASE DE NI POUR FABRICATION ADDITIVE ET PROCÉDÉ DE PRODUCTION DESTINÉS À UN PRODUIT DE FABRICATION ADDITIVE

(30) Priority: 07.09.2017 JP 2017172343
(43) Date of publication of application: 15.07.2020
(73) Proprietor: Hitachi Metals, Ltd., Tokyo 108-8224 (JP)
(72) Inventor: DAIGO, Yuzo, Tokyo 108-8224 (JP); SUGAHARA, Katsuo, Tokyo 108-8224 (JP)
(74) Representative: HGF
(86) International application number: PCT/JP2018/029779
(87) International publication number: WO 2019/049594

(56) References cited:
- EP-A1- 1 512 767
- EP-A1- 1 857 204
- WO-A1-2016/099390
- WO-A1-2017/026519
- JP-A- 2010 001 558
- JP-A- 2016 194 143
- JP-A- 2017 043 838
- JP-B1- 6 353 978

## Description

### TECHNICAL FIELD

The present invention relates to members or the like which are used for semiconductor production devices handling strongly corrosive halogen-based gas, which is typically HCl, Cl₂, HF, F₂, NF₃, ClF₃, HBr, or the like, and are to be directly contacted with such gas, and relates to a Ni-based corrosion-resistant alloy powder for additive manufacturing which is needed for additive manufacturing of such members; relates to members or parts consisting of an additive manufacturing product for semiconductor production devices (hereinafter, simply referred to as "member for semiconductor production devices"); and relates to a method for producing such a member or part.

### BACKGROUND ART

Most halogen-based gases such as HCl, Cl₂, HF, F₂, NF₃, ClF₃, and HBr are demanded as process gas for semiconductor production, and those subjected to ultra-high purification are used for such purpose. With progression of high-resolution implementation, including miniaturization and 3D implementation, of semiconductors, the acceptable particle size, considering the corrosion of metal members due to corrosive gas, has decreased, and requirements for corrosion resistance of metal materials constituting device members and piping members are becoming stricter. Upgrading material from conventional SUS316L to Ni-based corrosion-resistant alloy with superior corrosion resistance has thus been attempted.

As described in Patent Document 1, for example, use of a Ni-based alloy consisting of 50 mass% or more of Ni (hereinafter, "%" indicates "mass%"), 14.5 to 16.5% of Cr, 15.0 to 17.0% of Mo, 3.0 to 4.5% of W, 4.0 to 7.0% of Fe, carbon at a low content, and silicon at a low content, or a Ni-based alloy consisting of 50% or more of Ni, 20.0 to 22.5% of Cr, 12.5 to 14.5% of Mo, 2.5 to 3.5% of W, 2.0 to 6.0% of Fe, carbon at a low content, and silicon at a low content as a bellows member of a corrosion-resistant valve for control of ultra-high-purity gas in semiconductor production devices has been proposed.

Proposed similarly as a bellows member of a valve for control of ultra-high-purity gas to be used for ultra-high-purity gas production apparatuses and semiconductor production devices for semiconductor production processes are Ni-based alloys including a Ni-based alloy known as UNS N06625 (corresponding to Inconel 625 (registered trademark)) (a Ni-based alloy consisting of 58% or more of Ni, 20 to 23% of Cr, 5.0% or less of Fe, 8.0 to 10.0% of Mo, 3.15 to 4.15% of Nb (+ Ta), carbon at a low content, and silicon at a low content), a Ni-based alloy known as UNS N10276 (corresponding to Hastelloy C276 (registered trademark)) (a Ni-based alloy consisting of 50% or more of Ni, 14.5 to 16.5% of Cr, 15.0 to 17.0% of Mo, 3.0 to 4.5% of W, 4.0 to 7.0% of Fe, carbon at a low content, and silicon at a low content), and a Ni-based alloy known as UNS N06022 (corresponding to Hastelloy C22 (registered trademark)) (a Ni-based alloy consisting of 50% or more of Ni, 20 to 22.5% of Cr, 12.5 to 14.5% of Mo, 2.5 to 3.5% of W, 2.0 to 6.0% of Fe, carbon at a low content, and silicon at a low content).

The "UNS" indicating the alloy type of each of the Ni alloys is "Unified Numbering System" defined in ASE HS-1086 and ASTM DS-566, and the N06625, N10276, and N06022, and N07718 (described later) and so on are each a number specific to the corresponding alloy registered in them.

Patent Document 2 proposes a Ni-based corrosion-resistant alloy with excellent corrosion resistance and die forgeability as a member for producing a valve to be attached to cylinders for charging with, storing, and conveying strongly corrosive halogen compound gas such as HCl, HF, and HBr, and halogen gas such as chlorine, fluorine, and bromine, the Ni-based corrosion-resistant alloy having a composition including: 14.5 to 24% of Cr; 12 to 23% of Mo; 0.01 to 6% of Fe; 0.001 to 0.05% of Mg; 0.001 to 0.04% of N; 0.05 to 0.5% of Mn; 0.01 to 0.1% of Si; 0.01 to 0.5 of Al; 0.001 to 0.5% of Ti; 0.01 to 1.8% of Cu; 0.01 to 0.5% of V; and 5 to 50 ppm of B, and optionally further including more than 1% to 3.4% of Ta, 2 to 5% of W, and 0.01 to 5% of Co, and the balance of Ni with inevitable impurities, the inevitable impurities being adjusted to include less than 0.05% of C; less than 0.01% of S; and less than 0.01% of P. In addition, this document discloses that die forging with this Ni-based corrosion-resistant alloy does not cause generation of a crack, and valves of cylinders for charging with halogen gas and halogen compound gas can be fabricated with excellent dimensional accuracy merely by minimal machining as final finishing.

The Ni-based alloys according to the mentioned conventional techniques are shaped into a member of intended shape by subjecting a forging or rolled sheet thereof as a material to machining, welding, and so on, whereas complex shaping of a member with high accuracy is difficult by machining, welding, and so on.

Through recent progress of a technique of additive manufacturing, called 3D printing, however, complex shaping which was difficult or impossible to achieve by machining of casted or forged materials such as a sheet, a bar, and a pipe is becoming possible.

In fabrication of relatively small products requiring accuracy, metal powders are employed as a raw material for additive manufacturing.

For example, a Ni-based thermal-resistant alloy powder having the composition corresponding to that of an Ni-based alloy of thermal-resistant type known as UNS N07718 (corresponding to Inconel 718 (registered trademark)) (nominal composition: Ni - 19% Cr - 3% Mo - 5% (Nb + Ta) - 0.9% Ti - 0.5% Al - 19% Fe), as described in Patent Document 3, has been already applied as a powder for additive manufacturing, and used primarily for fabrication of members of complex shape for aircraft, which require thermal resistance.

Patent Document 4 discloses an age-hardenable, corrosion resistant Ni-Cr-Mo alloy, which can also be used in form of a powder.

### REFERENCE DOCUMENT LIST

### PATENT DOCUMENTS

Patent Document 1: JP H07-047989 B
Patent Document 2: JP 2010-001558 A
Patent Document 3: US 3,046,108 A
Patent Document 4: EP1512767 A1

### SUMMARY OF THE INVENTION

### PROBLEM TO BE SOLVED BY THE INVENTION

Halogen-based gas subjected to ultra-high purification is used as process gas in semiconductor production technology, and even stricter requirements have been imposed on management of contamination as finer wiring width is applied to semiconductor chips.

For this reason, it is desired to fabricate members for semiconductor production devices by using a Ni-based corrosion-resistant alloy having excellent corrosion resistance as proposed in Patent Document 2.

Furthermore, as sophistication of semiconductor production devices advances, design of members and parts constituting them become more highly complicated, and in particular, shaping is now required not only for the outer surface side but also for the inner side to be directly contacted with gas, and hence requirements are imposed beyond the fabrication capability of die forging and machining.

Thus, a Ni-based corrosion-resistant alloy powder which is excellent in corrosion resistance, allows complex shaping, and is thus suitable for additive manufacturing is strongly demanded, and development of additive manufacturing products using this Ni-based corrosion-resistant alloy powder is strongly desired.

In particular, Ni-based corrosion-resistant alloy powders for additive manufacturing products to be used as members for semiconductor production devices are required to be excellent in corrosion resistance and generate extremely few defects when processed into an additive manufacturing product.

### MEANS FOR SOLVING THE PROBLEM

In such circumstances, the present inventors diligently studied on a Ni-based corrosion-resistant alloy powder which solves the problems and enables additive manufacturing with specific properties and an additive manufacturing product using this powder to reach the following findings.

The present invention is defined by the independent claims. Advantageous embodiments are described in dependent claims.

Specifically, the findings are that a Ni-based corrosion-resistant alloy powder including in mass%: 14.5 to 24.0% of Cr; 12.0 to 23.0% of Mo; 0.01 to 7.00% of Fe; 0.001 to 2.500% of Co; 0.0001 to 0.0050% of Mg; 0.001 to 0.040% of N; 0.005 to 0.50% of Mn; 0.001 to 0.200% of Si; 0.01 to 0.50% of Al; 0.001 to 0.500% of Ti; 0.001 to 0.25% of Cu; 0.001 to 0.300 of V; 0.0001 to 0.0050% of B; 0.0001 to 0.0100% of Zr; and 0.0010 to 0.0300% of O, and optionally further containing either more than 1.0% to 2.5% of Ta or 2.0 to 5.0% of W, and the balance of Ni with inevitable impurities, wherein the inevitable impurities are reduced to less than 0.05% of C; less than 0.01% of S; and less than 0.01% of P, and the particle size is preferably 5 to 100 µm, and more preferably 20 to 80 µm, has excellent additive manufacturing properties such as generation of extremely few defects in additive manufacturing, and that additive manufacturing products (e.g., members for semiconductor production devices) fabricated through additive manufacturing therewith exhibit excellent corrosion resistance even in wet environments and in environments with semiconductor processing gas such as Cl₂, HBr, and NF₃.

### EFFECTS OF THE INVENTION

When a member for semiconductor production devices is fabricated through additive manufacturing with the Ni-based corrosion-resistant alloy powder for additive manufacturing according to the present invention, a member for semiconductor production devices that consists of an additive manufacturing product having high corrosion resistance without defects can be fabricated, and hence, the degree of freedom of design for members for semiconductor production devices dramatically increases to enable achievement of sophistication of semiconductor production devices and provide industrially excellent effects.

### MODE FOR CARRYING OUT THE INVENTION

Now, reasons for limitations on the composition and powder particle size of the Ni-based corrosion-resistant alloy powder according to the present invention will be described in detail.

### Cr:

Cr has an effect of enhancing corrosion resistance against halogen-based gas such as HCl, Cl₂, HF, F₂, NF₃, ClF₃, and HBr. In particular, when a member of a semiconductor production device once comes into contact with open air in upon opening, moisture from the atmosphere is adsorbed on the metal surface, and halogen-based process gas is hydrated with the moisture adsorbed, causing electrochemical corrosion. Cr exerts corrosion resistance against hydrated acid especially in a relatively dilute concentration region. In this case, 14.5% or more of Cr is needed to be contained, and when the Cr content is more than 24.0%, Cr combined with Mo impairs the phase stability in additive manufacturing, causes difficulty in maintenance of a single phase, and forms a bulky µ phase, leading to deteriorated corrosion resistance, and hence, the Cr content is set to 14.5% to 24.5%.

A preferred upper limit of Cr is 22.5%, and is more preferably 20.5%. A preferred lower limit of Cr is 15.0%, and is more preferably 18.0%.

### Mo:

Mo has an effect of enhancing corrosion resistance against halogen-based gas such as HCl, Cl₂, HF, F₂, NF₃, ClF₃, and HBr. In particular, when a member of a semiconductor production device once comes into contact with open air upon opening, moisture from the atmosphere is adsorbed on the metal surface, and halogen-based process gas is hydrated with the moisture adsorbed, causing electrochemical corrosion. Mo exerts corrosion resistance against hydrated acid, especially in an intermediate-to-high concentration region. In this case, 12.0% or more of Mo is needed to be contained, and when the Mo content is greater than 23.0%, poor oxidation resistance of Mo at high temperatures allows formation of thick oxide film on the surface of each powder particle in producing a powder through gas atomization, and defects due to the oxide become significant in additive manufacturing products produced with such a powder, which is not preferable. For this reason, the Mo content is set to 12.0% to 23.0%.

A preferred upper limit of Mo is 20.5%, and is more preferably 19.5%. A preferred lower limit of Mo is 14.0%, and is more preferably 16.0%.

### Fe and Co:

Fe and Co have higher melting points than Ni, and have an effect of increasing the viscosity of molten metal. Powders are produced, for example, by spraying molten metal to rapidly cool in an atmosphere gas. Addition of Fe and Co facilitates particle size control in production of a powder, and can reduce generation of fine powder particles (particle size: smaller than 5 µm), which are likely to make additive manufacturing difficult. In this case, 0.01% or more of Fe is needed to be contained, and when the Fe content is more than 7.00%, the corrosion resistance against hydrated acid is deteriorated, and hence, the Fe content is set to 0.01% to 7.00%.

A preferred upper limit of Fe is 5.50%, and is more preferably 1.00%. A preferred lower limit of Fe is 0.05%, and is more preferably 0.10%.

Similarly, 0.001% or more of Co is needed to be contained, and when the Co content is greater than 2.500%, defects due to micrometer-sized shrinkage cavities in coagulation of the powder in additive manufacturing become significant, which is not preferable. For this reason, the Co content is set to 0.001 to 2.500%.

A preferred upper limit of Co is 1.000%, and is more preferably 0.500%. A preferred lower limit of Co is 0.005%, and is more preferably 0.010%.

### N, Mn, and Mg:

Coexistence of N, Mn, and Mg has an effect of reducing microsegregation. In additive manufacturing, each powder particle is instantaneously converted into molten metal by a laser, and then shaped through coagulation by relatively rapid cooling. At this time, microsegregation may occur. The occurrence of microsegregation leads to formation of a dilute region with less contents of elements that exert corrosion resistance, such as Cr and Mo, the corrosion resistance is governed by the dilute region, and hence microsegregation should be reduced as much as possible. N, Mn, and Mg have an effect of stabilizing a Ni-fcc phase as the parent phase and promoting solution of Cr and Mo, as a result reducing the occurrence of microsegregation in coagulation by rapid cooling.

When the N content is less than 0.001%, however, the effect of reducing microsegregation in additive manufacturing is absent, and when the N content is more than 0.040%, on the other hand, nitrides are formed, causing more defects to additive manufacturing products, and hence, the N content is set to 0.001% to 0.040%.

A preferred upper limit of N is 0.030%, and is more preferably 0.020%. A preferred lower limit of N is 0.003%, and is more preferably 0.005%.

When the Mn content is less than 0.005%, similarly, the effect of reducing microsegregation in additive manufacturing is absent, and when the Mn content is greater than 0.50%, on the other hand, microsegregation is conversely promoted and corrosion resistance of additive manufacturing products tends to deteriorate, and hence, the Mn content is set to 0.005% to 0.50%.

A preferred upper limit of Mn is 0.40%, and is more preferably 0.35%. A preferred lower limit of Mn is 0.006%, and is more preferably 0.007%.

When the Mg content is less than 0.0001%, similarly, the effect of reducing microsegregation in additive manufacturing is absent, and thus, a tendency of deterioration of corrosion resistance of additive manufacturing products appears, and when the Mg content is more than 0.0050%, on the other hand, microsegregation is conversely promoted and corrosion resistance of additive manufacturing products tends to deteriorate, and hence the Mg content is set to 0.0001% to 0.0050%.

A preferred upper limit of Mg is 0.0030%, and is more preferably 0.0020%. A preferred lower limit of Mg is 0.0003%, and is more preferably 0.0005%.

The effects of those three elements are not equivalent to each other, and the present inventors have confirmed that the effect of reducing microsegregation is absent unless the contents of the three elements simultaneously fall within the specified ranges.

### Si, Al, and Ti:

Si, Al, and Ti added as deoxidizers have an effect of increasing the cleanliness of the alloy. Thereby, joining between powder particles is smooth in additive manufacturing, and as a result, defects in additive manufacturing products are reduced.

Si exhibits the effect when the Si content is 0.001% or more; however, Si tends to segregate in grain boundaries, deteriorating corrosion resistance when the Si content is more than 0.200%, and hence, the Si content is set to 0.001% to 0.200%.

A preferred upper limit of Si is 0.100%, and is more preferably less than 0.010%. A preferred lower limit of Si is 0.002%, and is more preferably 0.005%.

Similarly, Al exhibits an effect of cleaning the alloy when the Al content is 0.01% or more, and when the Al content is more than 0.5%, formation of oxide significantly occurs in additive manufacturing, causing more defects to additive manufacturing products. Hence, the Al content is set to 0.01% to 0.50%.

A preferred upper limit of Al is 0.40%, and is more preferably 0.30%. A preferred lower limit of A1 is 0.03%, and is more preferably 0.05%.

Similarly, Ti exhibits an effect of cleaning of the alloy when the Ti content is 0.001% or more, and when the Ti content is more than 0.500%, formation of oxide significantly occurs in additive manufacturing, causing more defects in additive manufacturing products. Hence, the Ti content is set to 0.001% to 0.500%.

A preferred upper limit of Ti is 0.200%, and is more preferably 0.100%. A preferred lower limit of Ti is 0.003%, and is more preferably 0.005%.

### Cu:

Cu has an effect of enhancing corrosion resistance in reductive, wet corrosive environments with hydrochloric acid, hydrofluoric acid, or the like. Thus, Cu is effective against electrochemical corrosion formed by process gas and moisture adsorbed on the metal surface. Cu exhibits the effect when the Cu content is 0.001% or more, and when the Cu content is greater than 0.25%, defects of additive manufacturing products become significant because of oxide on surfaces of powder particles produced, and hence, the Cu content is set to 0.001% to 0.250%.

A preferred upper limit of Cu is 0.100%, and is more preferably 0.010%. A preferred lower limit of Cu is 0.002%, and is more preferably 0.005%.

### V:

V has an effect of reducing generation of powder particles of large diameter in production of a powder from molten metal by spraying it. Powder particles of an excessively large diameter are not preferable because they generate large interparticle gaps in additive manufacturing, and defects become significant. For this reason, such powder particles are removed through classification of the powder, although this lowers the yield (powder yield), which is problematic industrially. The effect of reducing generation of large powder particles cannot be obtained without addition of 0.001% or more of V, and when the V content is greater than 0.300%, powder particles conversely become finer, which also lowers the yield (powder yield) for required particle sizes, and thus, is not preferable. Accordingly, the V content is set to 0.001% to 0.300%.

A preferred upper limit of V is 0.200%, and is more preferably 0.100%. A preferred lower limit of V is 0.003%, and is more preferably 0.005%.

### B and Zr:

B and Zr each become a nucleus in a coagulation process to exert an effect of preventing generation of shrinkage cavities. While a process in which individual powder particles are dissolved and coagulated together is repeated in forming a multilayer product, shrinkage cavities generated during a coagulation process make the resulting product unacceptable as a multilayer product to be used as a member or part for semiconductor production devices because such defects serve as particle generation sources.

B exhibits an effect of preventing generation of shrinkage cavities when the B content is 0.0001% or more; however, B tends to segregate in grain boundaries, deteriorating the corrosion resistance when the B content is greater than 0.0050%, and hence, the B content is set to 0.0001% to 0.0050%.

A preferred upper limit of B is 0.0040%, and is more preferably less than 0.0030%. A preferred lower limit of B is 0.0002%, and is more preferably 0.0005%.

Similarly, Zr exhibits an effect of preventing generation of shrinkage cavities when the Zr content is 0.0001% or more; however, as with B, Zr tends to segregate in grain boundaries to deteriorate the corrosion resistance when the Zr content is more than 0.0100%, and hence, the Zr content is set to 0.0001% to 0.0100%.

A preferred upper limit of Zr is 0.0080%, and is more preferably less than 0.0060%. A preferred lower limit of Zr is 0.0005%, and is more preferably 0.0008%.

The effects of these two elements are not equivalent to each other, and the present inventors have confirmed that the effect of preventing generation of shrinkage cavities is does not occur unless the contents of the two elements simultaneously fall within the specified ranges.

### O:

In a state of a high temperature immediately after coagulation in a step of spraying molten metal in powder production, O instantaneously bonds primarily to Cr and forms an ultrathin, robust oxide film on surfaces of powder particles to exert an effect of preventing progression of additional oxidation. Thereby, amounts of oxides derived from the powder become mixed as foreign substances in additive manufacturing products are reduced to an extremely low level. O exhibits the effect when the O content is 0.0010% or more, and when the O content is greater than 0.0300%, oxides on surfaces of powder particles make defects in additive manufacturing products significant, and hence, the O content is set to 0.0010% to 0.0300%.

A preferred upper limit of O is 0.0200%, and is more preferably 0.0100%. A preferred lower limit of O is 0.0020%, and is more preferably 0.0050%.

### Ta:

Ta is added as necessary because it has an effect of improving corrosion resistance against reductive and oxidative acids and corrosion resistance against pitting and linear erosion. Ta exhibits an effect of significantly improving corrosion resistance when the Ta content is greater than 1.0%, but when the Ta content is greater than 2.5%, the amount of oxide formed on surfaces of powder particles in powder production increases to make defects of multilayered articles significant, and hence, the Ta content is set to greater than 1.0% to 2.5%.

A preferred upper limit of Ta is 2.3%, and is more preferably 2.2%. A preferred lower limit of Ta is 1.1%, and is more preferably 1.2%.

### W:

W is added as necessary because it has, as with Mo, an effect of enhancing corrosion resistance against reductive acid, and at the same time, raises the melting point to increase the viscosity of molten metal, facilitating particle size control in production of a powder, and can reduce generation of fine powder particles (particle size: smaller than 5 µm), which is likely to make additive manufacturing difficult, and addition of 2.0% or more is required to obtain the effect. When the W content is greater than 5.0%, however, the melting point becomes excessively high and powder particles tend to be larger, which drops the yield (powder yield) of classification for appropriate powder particle sizes, and this is not preferable, and hence, the W content is set to 2% to 5%.

A preferred upper limit of W is 4.9%, and is more preferably 4.5%. A preferred lower limit of W is 2.2%, and is more preferably 2.5%.

### Inevitable impurities:

An inevitable impurity of C forms a carbide with Cr in the vicinity of crystal grain boundaries to greatly deteriorate corrosion resistance. Accordingly, the C content is set to less than 0.05%. S and P segregate in grain boundaries to cause hot cracks, and hence, the S and P contents should be each reduced to less than 0.01%.

The contents of these inevitable impurities are preferably lower, and may be 0%.

### Powder particle size

Additive manufacturing is a modeling method for forming by repeating melting and coagulating individual powder particles, and when the particle size of the Ni-based corrosion-resistant alloy powder is smaller than 5 µm, it is difficult to obtain a volume required for one cycle of melting and coagulation, and hence, robust additive manufacturing products are less likely to be produced. When the particle size of the Ni-based corrosion-resistant alloy powder is larger than 100 µm, on the other hand, the volume required for one cycle of melting and coagulation is so excessively large that robust additive manufacturing products are less likely to be produced.

Accordingly, the particle size of the Ni-based corrosion-resistant alloy powder is preferably set to 5 to 100 µm, and more preferably is 20 to 80 µm.

The powder is preferably obtained by gas atomization, which provides spherical shape. The particle size distribution of the powder was determined by using a laser diffraction particle size analyzer.

The composition of the Ni-based corrosion-resistant alloy powder for additive manufacturing according to the present invention can be measured through the following measurement approach.

As described later in Examples, a classified powder for additive manufacturing was dissolved in an appropriate aqueous solution, and this aqueous solution was subjected to high-frequency inductively coupled plasma (ICP) analysis to measure the contents of specific components.

The C, S, N, and O contents were determined through gas analysis with a combustion method.

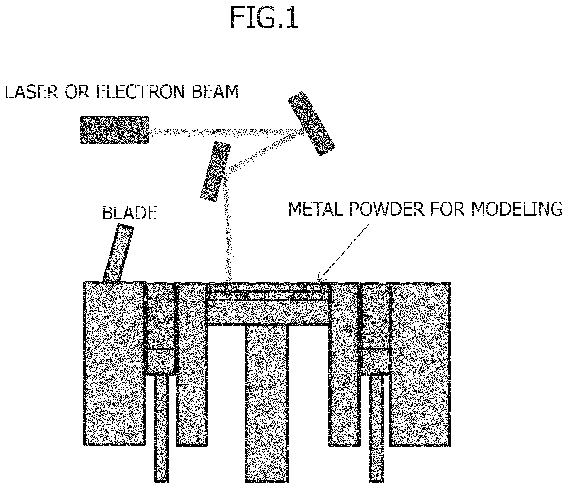

In the present invention, a model of intended shape can be formed through additive manufacturing in the following manner: the Ni-based corrosion-resistant alloy powder for additive manufacturing according to the present invention is fed to an additive manufacturing device, for example, an additive manufacturing device in a powder bed fusion method illustrated in Fig. 1; and a region covered with the powder is irradiated with a high-energy ray such as a laser and an electron beam to selectively fuse the alloy powder.

Additive manufacturing using the Ni-based corrosion-resistant alloy powder for additive manufacturing according to the present invention provides members for semiconductor production devices, such as a valve member of cylinders for charging with halogen gas and halogen compound gas, a gas contact member in mass flow meters, a gas block member, and a gas pipe joint, with extremely few defects and excellent corrosion resistance under wet environments and environments with semiconductor process gas.

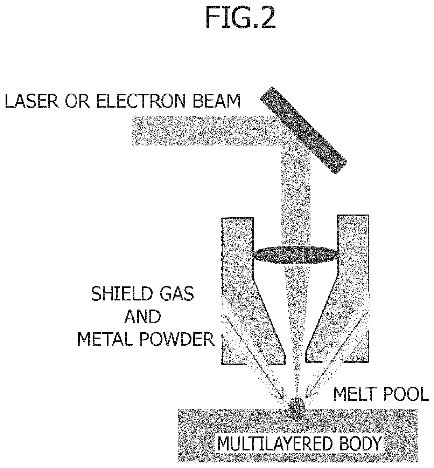

Not only the additive manufacturing device illustrated in Fig. 1, but also, for example, an additive manufacturing device in a directed energy deposition method illustrated in Fig. 2, can be used according to the form of the additive manufacturing products. There is no limitation to any models of additive manufacturing devices.

### BRIEF DESCRIPTION OF THE DRAWINGS

Fig. 1 is a schematic view showing one example of an additive manufacturing device known as a powder bed fusion method.
Fig. 2 is a schematic diagram showing one example of an additive manufacturing device known as a directed energy deposition method.

Next, Examples of the present invention will be described.

### EXAMPLES

High-purity raw materials for melting were prepared and melted by using a common high-frequency vacuum melting furnace to provide about 10 kg of each mother alloy, and base powders to obtain the inventive Ni-based corrosion-resistant alloy powders for additive manufacturing with compositions as listed in Tables 1 and 2 were produced through gas atomization in an argon atmosphere.

In the same manner, base powders to obtain comparative Ni-based corrosion-resistant alloy powders for additive manufacturing with compositions listed in Tables 3 and 4 were produced.

Each of the base powders obtained as described above still in a gas-atomized state was classified with a plurality of sieves into a powder with particle size of 20 to 80 µm for additive manufacturing and the other powders.

It should be noted that there is no conventional product of Ni-based corrosion-resistant alloy powder for additive manufacturing.

**Table 1**

| | (Continuing in Table 2) | | | | | | | | |
|---|---|---|---|---|---|---|---|---|---|
| Invention alloy powder | Composition (mass%) | | | | | | | | |
| | Cr | Mo | Fe | Co | Mg | N | Mn | Si | Al |
| 1 | 18.8 | 18.7 | 0.34 | 0.011 | 0.0018 | 0.008 | 0.011 | 0.013 | 0.31 |
| 2 | 21.2 | 13.4 | 4.55 | 0.732 | 0.0013 | 0.012 | 0.161 | 0.031 | 0.32 |
| 3 | 15.4 | 16 | 6.04 | 1.214 | 0.0043 | 0.023 | 0.490 | 0.040 | 0.34 |
| 4 | 22.8 | 15.7 | 0.56 | 0.009 | 0.0004 | 0.027 | 0.132 | 0.013 | 0.21 |
| 5 | 20.4 | 16.3 | 0.14 | 0.152 | 0.0007 | 0.026 | 0.231 | 0.011 | 0.28 |
| 6 | 15.2 | 22.2 | 0.97 | 0.621 | 0.0008 | 0.022 | 0.244 | 0.026 | 0.24 |
| 7 | 14.6 | 15.4 | 0.62 | 0.399 | 0.0018 | 0.010 | 0.063 | 0.044 | 0.13 |
| 8 | 23.9 | 14.3 | 1.94 | 0.015 | 0.0024 | 0.027 | 0.162 | 0.016 | 0.08 |
| 9 | 22.5 | 12.1 | 4.04 | 0.062 | 0.0008 | 0.006 | 0.236 | 0.020 | 0.40 |
| 10 | 18.6 | 22.9 | 2.71 | 0.007 | 0.0021 | 0.012 | 0.325 | 0.046 | 0.23 |
| 11 | 16.3 | 14.6 | 0.01 | 0.714 | 0.0018 | 0.012 | 0.195 | 0.028 | 0.40 |
| 12 | 15.8 | 16.7 | 6.98 | 0.593 | 0.0007 | 0.012 | 0.355 | 0.008 | 0.11 |
| 13 | 19.8 | 15.8 | 2.03 | 0.001 | 0.0025 | 0.028 | 0.074 | 0.094 | 0.30 |
| 14 | 16.9 | 15.5 | 3.97 | 2.495 | 0.0022 | 0.027 | 0.290 | 0.081 | 0.27 |
| 15 | 20.2 | 14.6 | 4.46 | 0.419 | 0.0001 | 0.023 | 0.054 | 0.048 | 0.38 |
| 16 | 19.8 | 20.2 | 0.06 | 0.920 | 0.0049 | 0.010 | 0.091 | 0.040 | 0.31 |
| 17 | 21.0 | 18.8 | 0.62 | 0.970 | 0.0006 | 0.001 | 0.179 | 0.005 | 0.04 |
| 18 | 17.4 | 19.9 | 1.95 | 0.035 | 0.0028 | 0.040 | 0.248 | 0.037 | 0.31 |
| 19 | 18.4 | 19.2 | 0.54 | 0.469 | 0.0012 | 0.022 | 0.005 | 0.048 | 0.08 |
| 20 | 16.3 | 20.3 | 0.41 | 0.546 | 0.0022 | 0.005 | 0.495 | 0.066 | 0.11 |
| 21 | 15.7 | 14.8 | 4.23 | 0.279 | 0.0018 | 0.017 | 0.012 | 0.001 | 0.08 |
| 22 | 19.2 | 19.9 | 1.72 | 0.204 | 0.0029 | 0.029 | 0.343 | 0.199 | 0.30 |
| 23 | 22.1 | 18.4 | 1.19 | 0.171 | 0.0026 | 0.013 | 0.203 | 0.013 | 0.01 |
| 24 | 18.0 | 19.9 | 2.43 | 0.077 | 0.0024 | 0.027 | 0.326 | 0.021 | 0.49 |
| 25 | 21.7 | 19.7 | 3.87 | 0.806 | 0.0006 | 0.004 | 0.056 | 0.052 | 0.34 |
| 26 | 19.9 | 18.7 | 0.58 | 0.609 | 0.0017 | 0.019 | 0.045 | 0.063 | 0.08 |
| 27 | 20.8 | 16.2 | 2.24 | 0.644 | 0.0028 | 0.015 | 0.141 | 0.048 | 0.21 |
| 28 | 20.6 | 14.2 | 2.03 | 0.662 | 0.0026 | 0.009 | 0.236 | 0.007 | 0.30 |
| 29 | 17.0 | 18.4 | 2.31 | 0.812 | 0.0005 | 0.028 | 0.359 | 0.036 | 0.11 |
| 30 | 17.7 | 15.7 | 2.10 | 0.256 | 0.0013 | 0.024 | 0.123 | 0.070 | 0.39 |
| 31 | 21.6 | 15.8 | 2.54 | 0.723 | 0.0016 | 0.012 | 0.273 | 0.009 | 0.24 |
| 32 | 18.5 | 19.8 | 2.79 | 0.110 | 0.0020 | 0.016 | 0.036 | 0.026 | 0.21 |
| 33 | 19.1 | 14.1 | 0.82 | 0.785 | 0.0008 | 0.026 | 0.197 | 0.097 | 0.08 |
| 34 | 15.9 | 15.8 | 3.79 | 0.565 | 0.0008 | 0.021 | 0.090 | 0.073 | 0.33 |
| 35 | 19.7 | 14.1 | 3.43 | 0.242 | 0.0010 | 0.019 | 0.191 | 0.028 | 0.24 |
| 36 | 15.3 | 16.5 | 4.45 | 0.244 | 0.0005 | 0.028 | 0.361 | 0.064 | 0.24 |
| 37 | 18.5 | 14.5 | 0.38 | 0.477 | 0.0013 | 0.011 | 0.305 | 0.040 | 0.40 |
| 38 | 20.5 | 17.2 | 3.51 | 0.927 | 0.0016 | 0.004 | 0.138 | 0.050 | 0.04 |
| 39 | 18.8 | 14.7 | 1.49 | 0.372 | 0.0003 | 0.016 | 0.349 | 0.015 | 0.34 |
| 40 | 18.3 | 16.0 | 4.06 | 0.700 | 0.0003 | 0.019 | 0.356 | 0.004 | 0.14 |

**Table 2**

| | (Continued from Table 1) | | | | | | | | |
|---|---|---|---|---|---|---|---|---|---|
| Invention alloy powder | Composition (mass%) | | | | | | | | |
| | Ti | Cu | V | B | Zr | O | Ta | W | Ni + inevitable impurities |
| 1 | 0.012 | 0.031 | 0.008 | 0.0007 | 0.0062 | 0.0012 | 1.8 | - | balance |
| 2 | 0.014 | 0.033 | 0.043 | 0.0006 | 0.0083 | 0.0154 | - | 2.9 | balance |
| 3 | 0.009 | 0.021 | 0.007 | 0.0007 | 0.0064 | 0.0176 | - | 3.7 | balance |
| 4 | 0.006 | 0.027 | 0.103 | 0.0007 | 0.0071 | 0.0157 | - | - | balance |
| 5 | 0.063 | 0.035 | 0.088 | 0.0012 | 0.0086 | 0.0174 | - | 3.9 | balance |
| 6 | 0.041 | 0.044 | 0.109 | 0.0016 | 0.0010 | 0.0166 | - | - | balance |
| 7 | 0.062 | 0.058 | 0.078 | 0.0024 | 0.0034 | 0.0176 | - | - | balance |
| 8 | 0.165 | 0.043 | 0.037 | 0.0003 | 0.0074 | 0.0174 | - | - | balance |
| 9 | 0.163 | 0.046 | 0.181 | 0.0018 | 0.0043 | 0.0032 | - | - | balance |
| 10 | 0.188 | 0.060 | 0.153 | 0.0037 | 0.0030 | 0.0089 | - | - | balance |
| 11 | 0.183 | 0.066 | 0.053 | 0.0038 | 0.0073 | 0.0092 | - | - | balance |
| 12 | 0.070 | 0.081 | 0.115 | 0.0025 | 0.0047 | 0.0178 | - | - | balance |
| 13 | 0.031 | 0.057 | 0.196 | 0.0029 | 0.0049 | 0.0107 | - | - | balance |
| 14 | 0.134 | 0.030 | 0.105 | 0.0020 | 0.0035 | 0.0199 | - | - | balance |
| 15 | 0.049 | 0.092 | 0.108 | 0.0010 | 0.0018 | 0.0098 | - | - | balance |
| 16 | 0.101 | 0.073 | 0.149 | 0.0023 | 0.0061 | 0.0157 | - | - | balance |
| 17 | 0.052 | 0.056 | 0.138 | 0.0010 | 0.0046 | 0.0130 | - | - | balance |
| 18 | 0.177 | 0.094 | 0.016 | 0.0025 | 0.0072 | 0.0089 | - | - | balance |
| 19 | 0.066 | 0.043 | 0.018 | 0.0014 | 0.0020 | 0.0112 | - | - | balance |
| 20 | 0.133 | 0.057 | 0.076 | 0.0037 | 0.0072 | 0.0112 | - | - | balance |
| 21 | 0.113 | 0.011 | 0.098 | 0.0033 | 0.0047 | 0.0029 | - | - | balance |
| 22 | 0.136 | 0.083 | 0.120 | 0.0021 | 0.0067 | 0.0054 | - | - | balance |
| 23 | 0.096 | 0.020 | 0.135 | 0.0021 | 0.0023 | 0.0113 | - | - | balance |
| 24 | 0.181 | 0.058 | 0.025 | 0.0012 | 0.0071 | 0.0145 | - | - | balance |
| 25 | 0.001 | 0.028 | 0.162 | 0.0029 | 0.0043 | 0.0156 | - | - | balance |
| 26 | 0.496 | 0.078 | 0.171 | 0.0030 | 0.0079 | 0.0171 | - | - | balance |
| 27 | 0.019 | 0.001 | 0.127 | 0.0026 | 0.0016 | 0.0109 | - | - | balance |
| 28 | 0.038 | 0.248 | 0.165 | 0.0024 | 0.0066 | 0.0142 | - | - | balance |
| 29 | 0.088 | 0.098 | 0.001 | 0.0013 | 0.0045 | 0.0157 | - | - | balance |
| 30 | 0.190 | 0.020 | 0.298 | 0.0039 | 0.0023 | 0.0155 | - | - | balance |
| 31 | 0.130 | 0.047 | 0.153 | 0.0001 | 0.0073 | 0.0179 | - | - | balance |
| 32 | 0.073 | 0.076 | 0.097 | 0.0049 | 0.0045 | 0.0165 | - | - | balance |
| 33 | 0.030 | 0.074 | 0.182 | 0.0033 | 0.0001 | 0.0134 | - | - | balance |
| 34 | 0.046 | 0.033 | 0.117 | 0.0025 | 0.0099 | 0.0031 | - | - | balance |
| 35 | 0.127 | 0.065 | 0.100 | 0.0010 | 0.0018 | 0.0010 | - | - | balance |
| 36 | 0.094 | 0.049 | 0.127 | 0.0030 | 0.0048 | 0.0297 | - | - | balance |
| 37 | 0.144 | 0.091 | 0.040 | 0.0021 | 0.0048 | 0.0035 | 1.1 | - | balance |
| 38 | 0.019 | 0.047 | 0.155 | 0.0034 | 0.0067 | 0.0031 | 2.5 | - | balance |
| 39 | 0.020 | 0.005 | 0.039 | 0.0033 | 0.0068 | 0.0140 | - | 2.1 | balance |
| 40 | 0.152 | 0.082 | 0.180 | 0.0013 | 0.0031 | 0.0192 | - | 5.0 | balance |

**Table 3**

| | (Continuing in Table 4) | | | | | | | | |
|---|---|---|---|---|---|---|---|---|---|
| Comparative alloy powder | Composition (mass%) | | | | | | | | |
| | Cr | Mo | Fe | Co | Mg | N | Mn | Si | Al |
| 1 | 14.3* | 14.6 | 2.50 | 1.405 | 0.0024 | 0.018 | 0.053 | 0.063 | 0.37 |
| 2 | 24.2* | 14.8 | 2.46 | 0.086 | 0.0028 | 0.030 | 0.059 | 0.019 | 0.45 |
| 3 | 19.0 | 11.8* | 0.17 | 0.952 | 0.0009 | 0.014 | 0.224 | 0.075 | 0.10 |
| 4 | 21.1 | 23.2* | 5.13 | 1.193 | 0.0012 | 0.011 | 0.347 | 0.018 | 0.21 |
| 5 | 22.6 | 19.4 | -* | 1.849 | 0.0016 | 0.031 | 0.413 | 0.096 | 0.16 |
| 6 | 20.4 | 18.1 | 7.05* | 1.432 | 0.0021 | 0.021 | 0.245 | 0.006 | 0.06 |
| 7 | 18.1 | 13.7 | 0.77 | -* | 0.0037 | 0.038 | 0.318 | 0.109 | 0.10 |
| 8 | 17.4 | 14.3 | 4.35 | 2.505* | 0.0009 | 0.031 | 0.156 | 0.039 | 0.17 |
| 9 | 16.7 | 16.6 | 0.47 | 0.073 | -* | 0.012 | 0.466 | 0.126 | 0.29 |
| 10 | 21.8 | 19.2 | 4.85 | 1.692 | 0.0052* | 0.015 | 0.496 | 0.047 | 0.27 |
| 11 | 20.7 | 20.0 | 3.47 | 1.551 | 0.0018 | -* | 0.450 | 0.119 | 0.02 |
| 12 | 15.5 | 17.3 | 3.80 | 2.027 | 0.0020 | 0.043* | 0.431 | 0.017 | 0.13 |
| 13 | 14.9 | 17.7 | 5.23 | 0.996 | 0.0006 | 0.018 | 0.003* | 0.064 | 0.15 |
| 14 | 22.2 | 21.9 | 4.27 | 1.017 | 0.0049 | 0.016 | 0.522* | 0.011 | 0.05 |
| 15 | 16.3 | 12.9 | 0.54 | 2.172 | 0.0026 | 0.028 | 0.366 | -* | 0.33 |
| 16 | 21.6 | 22.4 | 5.34 | 1.325 | 0.0038 | 0.006 | 0.298 | 0.204* | 0.42 |
| 17 | 14.8 | 18.3 | 0.46 | 0.615 | 0.0047 | 0.006 | 0.446 | 0.085 | -* |
| 18 | 18.2 | 13.7 | 0.58 | 1.870 | 0.0045 | 0.021 | 0.372 | 0.087 | 0.53* |
| 19 | 22.3 | 17.7 | 0.53 | 0.550 | 0.0018 | 0.007 | 0.241 | 0.076 | 0.28 |
| 20 | 23.9 | 19.7 | 3.33 | 1.398 | 0.0039 | 0.038 | 0.304 | 0.019 | 0.47 |
| 21 | 21.6 | 19.4 | 5.36 | 1.385 | 0.0025 | 0.010 | 0.295 | 0.190 | 0.49 |
| 22 | 18.4 | 16.6 | 2.88 | 0.371 | 0.0023 | 0.037 | 0.338 | 0.065 | 0.12 |
| 23 | 20.3 | 18.8 | 3.71 | 0.176 | 0.0027 | 0.006 | 0.430 | 0.187 | 0.30 |
| 24 | 21.0 | 21.0 | 1.80 | 0.397 | 0.0045 | 0.028 | 0.215 | 0.184 | 0.28 |
| 25 | 21.0 | 19.5 | 2.92 | 1.267 | 0.0030 | 0.037 | 0.179 | 0.140 | 0.22 |
| 26 | 18.4 | 14.0 | 3.50 | 0.908 | 0.0040 | 0.014 | 0.294 | 0.146 | 0.07 |
| 27 | 20.5 | 14.3 | 3.82 | 0.513 | 0.0013 | 0.007 | 0.250 | 0.111 | 0.39 |
| 28 | 21.4 | 20.7 | 1.97 | 0.648 | 0.0036 | 0.002 | 0.161 | 0.133 | 0.04 |
| 29 | 19.8 | 18.0 | 0.14 | 2.089 | 0.0005 | 0.016 | 0.258 | 0.120 | 0.09 |
| 30 | 17.8 | 20.8 | 0.83 | 0.921 | 0.0015 | 0.023 | 0.343 | 0.200 | 0.31 |

| | | | | | | | | | |
|---|---|---|---|---|---|---|---|---|---|
| Note: the asterisk * indicates out of the scope of the present invention. | | | | | | | | | |

**Table 4**

| | (Continued from Table 3) | | | | | | | | |
|---|---|---|---|---|---|---|---|---|---|
| Comparative alloy powder | Composition (mass%) | | | | | | | | |
| | Ti | Cu | V | B | Zr | O | Ta | W | Ni + inevitable impurities |
| 1 | 0.340 | 0.074 | 0.076 | 0.0027 | 0.0081 | 0.0291 | - | - | balance |
| 2 | 0.236 | 0.110 | 0.027 | 0.0037 | 0.0020 | 0.0196 | - | - | balance |
| 3 | 0.126 | 0.025 | 0.074 | 0.0004 | 0.0027 | 0.0085 | - | - | balance |
| 4 | 0.358 | 0.019 | 0.282 | 0.0030 | 0.0054 | 0.0193 | - | - | balance |
| 5 | 0.406 | 0.097 | 0.219 | 0.0003 | 0.0074 | 0.0260 | - | - | balance |
| 6 | 0.382 | 0.166 | 0.251 | 0.0002 | 0.0078 | 0.0110 | - | - | balance |
| 7 | 0.454 | 0.126 | 0.091 | 0.0003 | 0.0037 | 0.0173 | - | - | balance |
| 8 | 0.348 | 0.166 | 0.112 | 0.0044 | 0.0075 | 0.0158 | - | - | balance |
| 9 | 0.193 | 0.094 | 0.078 | 0.0025 | 0.0087 | 0.0229 | - | - | balance |
| 10 | 0.129 | 0.094 | 0.216 | 0.0048 | 0.0033 | 0.0059 | - | - | balance |
| 11 | 0.142 | 0.203 | 0.258 | 0.0014 | 0.0021 | 0.0107 | - | - | balance |
| 12 | 0.197 | 0.126 | 0.190 | 0.0049 | 0.0010 | 0.0136 | - | - | balance |
| 13 | 0.108 | 0.215 | 0.037 | 0.0025 | 0.0051 | 0.0033 | - | - | balance |
| 14 | 0.199 | 0.086 | 0.230 | 0.0017 | 0.0060 | 0.0106 | - | - | balance |
| 15 | 0.369 | 0.036 | 0.275 | 0.0006 | 0.0023 | 0.0124 | - | - | balance |
| 16 | 0.201 | 0.072 | 0.271 | 0.0024 | 0.0027 | 0.0083 | - | - | balance |
| 17 | 0.098 | 0.094 | 0.174 | 0.0004 | 0.0041 | 0.0246 | - | - | balance |
| 18 | 0.475 | 0.054 | 0.233 | 0.0023 | 0.0006 | 0.0162 | - | - | balance |
| 19 | -* | 0.064 | 0.158 | 0.0048 | 0.0071 | 0.0095 | - | - | balance |
| 20 | 0.505* | 0.237 | 0.064 | 0.0019 | 0.0081 | 0.0192 | - | - | balance |
| 21 | 0.417 | -* | 0.148 | 0.0004 | 0.0083 | 0.0125 | - | - | balance |
| 22 | 0.064 | 0.253* | 0.045 | 0.0025 | 0.0090 | 0.0244 | - | - | balance |
| 23 | 0.435 | 0.247 | -* | 0.0022 | 0.0074 | 0.0168 | - | - | balance |
| 24 | 0.073 | 0.152 | 0.303* | 0.0019 | 0.0001 | 0.0284 | - | - | balance |
| 25 | 0.149 | 0.199 | 0.246 | -* | 0.0056 | 0.0015 | - | - | balance |
| 26 | 0.001 | 0.236 | 0.245 | 0.0052* | 0.0044 | 0.0099 | - | - | balance |
| 27 | 0.006 | 0.212 | 0.284 | 0.0022 | -* | 0.0149 | - | - | balance |
| 28 | 0.162 | 0.064 | 0.119 | 0.0028 | 0.0105* | 0.0222 | - | - | balance |
| 29 | 0.280 | 0.175 | 0.106 | 0.0033 | 0.0001 | -* | - | - | balance |
| 30 | 0.255 | 0.161 | 0.009 | 0.0026 | 0.0097 | 0.0303* | - | - | balance |

| | | | | | | | | | |
|---|---|---|---|---|---|---|---|---|---|
| Note: the asterisk * indicates out of the scope of the present invention. | | | | | | | | | |

### 5 Powder yield (%):

The powder yield (%) of each powder obtained through classification with particle sizes of 20 to 80 µm for additive manufacturing was determined as a value of (mass of powder with particle size of 20 to 80 µm) × 100 / (mass of powder still in gas-atomized state).

Tables 5 and 6 show the values of powder yields (%). According to measurement of particle size distribution performed before the classification, powders with excellent yields were such that the proportion of powder particles smaller than 5 µm was 10% or less and the proportion of powder particles equal to or larger than 5 µm was high owing to composition adjustment.

The powders with particle sizes of 20 to 80 µm obtained through the classification were used as the inventive Ni-based corrosion-resistant alloy powders for additive manufacturing (hereinafter, referred to as "invention alloy powders") 1 to 40 and comparative Ni-based corrosion-resistant alloy powders for additive manufacturing (hereinafter, referred to as "comparative alloy powders") 1 to 30.

Next, the additive manufacturing device in a powder bed fusion mode (powder bed fusion method) illustrated in Figure 1 was used to make 10 sheet materials (30 × 30 × 5 mm) as additive manufacturing products for evaluation for each of the inventive alloy powders 1 to 40 and the comparative alloy powders 1 to 30.

The sheet materials (30 × 30 × 5 mm) as additive manufacturing products for evaluation were subjected to the following evaluations.

### Measurement of defect rates (area%):

Each of the sheet materials (30 × 30 × 5 mm) as additive manufacturing products for evaluation was cut to expose the cross-section, which was buried in a resin, polished with sheets of waterproof emery paper fine to #1500, and then further polished with diamond paste of 1 µm in particle size to prepare a mirror-finished surface.

The mirror-finished surface was observed with an optical microscope to identify defects (pores, cavities) present in a range of 1 mm × 1 mm through image analysis, and the area ratio was determined as the defect rate (area%).

Binarization was performed by using image analysis software with a resolution of 1024 × 1280 pixels, and black portions of 8 pixels or more were regarded as defects.

The values of defect rates (area%) are shown in Tables 5 and 6.

### Evaluation of corrosion resistance in wet environment:

The surface of each of the sheet materials (30 × 30 × 5 mm) as additive manufacturing products for evaluation was polished and ultimately finished with a sheet of waterproof emery paper #400. Thereafter, the surface was subjected to electrolytic polishing, and the polished sample was retained in acetone and subjected to ultrasonic vibration for 5 minutes to degrease. In this way, corroded test pieces were prepared.

The corroded test pieces were subjected to a 24-hour corrosion test in boiled 1% HCl or 35% HCl.

Weight reduction after the test was measured to calculate corrosion speed (mm/year) from the surface area before the test and test period.

The results are shown in Tables 5 and 6.

### Evaluation of corrosion resistance against semiconductor process gas:

The surface of each of the sheet materials (30 × 30 × 5 mm) as additive manufacturing products for evaluation was polished and ultimately finished with a sheet of waterproof emery paper #400. Thereafter, the surface is subjected to electrolytic polishing, and the polished sample was retained in acetone and subjected to ultrasonic vibration for 5 minutes to degrease. In this way, corroded test pieces were prepared.

The corroded test pieces were placed in a small chamber of Ni-based alloy (UNS N06022) for testing, the chamber was evacuated, then charged with corrosive gas (Cl₂, HBr, NF₃), retained at a predetermined temperature depending on the type of the corrosive gas (Cl₂: 250°C, HBr: 250°C, NF₃: 350°C) for 24 hours, then cooled to room temperature, and purged with argon gas, and then the corroded test pieces were quickly transferred in a vacuum desiccator and stored therein.

The corroded test pieces were sequentially subjected to SEM observation, and area ratios of corroded portions observed as islands in photographs taken were measured using image analysis.

The resolution was 1024 × 1280, the magnification was 500×, and corroded portions of 8 pixels or more were regarded as corrosion regions.

The results are shown in Tables 5 and 6.

No corroded test piece was prepared for comparative alloy powders with a low powder yield or a high defect rate, and evaluation of corrosion resistance was not performed as well.

**Table 5**

| Invention alloy powder | Powder yield (%) | Defect rate (area%) | Corrosion resistance in wet environment (corrosion speed, mm/year) | | Corrosion resistance against halogen-based gas (area ratio of corroded parts, %) | | | Remarks |
|---|---|---|---|---|---|---|---|---|
| | | | 1% HCl | 35% HCl | Cl₂ | HBr | NF₃ | |
| 1 | 33.7 | 0.5 | 0.01 | 0.11 | 0.35 | 0.47 | 0.43 | |
| 2 | 40.9 | 0.4 | 0.13 | 0.13 | 2.55 | 0.40 | 2.34 | |
| 3 | 40.0 | 0.3 | 0.45 | 0.15 | 3.26 | 0.94 | 3.79 | |
| 4 | 37.0 | 0.7 | 0.15 | 0.18 | 3.84 | 4.87 | 2.53 | |
| 5 | 34.2 | 0.7 | 0.03 | 0.16 | 4.78 | 3.28 | 4.63 | |
| 6 | 40.1 | 0.7 | 0.08 | 0.12 | 0.45 | 2.83 | 3.00 | |
| 7 | 39.2 | 0.4 | 0.08 | 0.16 | 0.93 | 2.87 | 3.85 | |
| 8 | 34.6 | 0.5 | 0.06 | 0.13 | 0.38 | 2.28 | 4.64 | |
| 9 | 38.2 | 0.9 | 0.06 | 0.26 | 3.57 | 2.37 | 3.23 | |
| 10 | 41.8 | 0.6 | 0.01 | 0.10 | 3.78 | 2.82 | 2.98 | |
| 11 | 40.3 | 0.6 | 0.21 | 0.18 | 0.36 | 0.68 | 4.60 | |
| 12 | 38.0 | 0.4 | 0.16 | 0.17 | 0.42 | 1.81 | 4.35 | |
| 13 | 37.0 | 0.9 | 0.17 | 0.02 | 4.81 | 3.07 | 1.50 | |
| 14 | 38.1 | 0.4 | 0.07 | 0.26 | 1.34 | 4.84 | 2.09 | |
| 15 | 37.3 | 0.6 | 0.11 | 0.02 | 0.99 | 3.75 | 4.60 | |
| 16 | 38.8 | 0.7 | 0.18 | 0.05 | 2.39 | 3.19 | 1.01 | |
| 17 | 37.3 | 0.4 | 0.04 | 0.02 | 1.01 | 2.42 | 0.99 | |
| 18 | 37.9 | 0.4 | 0.13 | 0.05 | 2.03 | 3.65 | 4.48 | |
| 19 | 37.0 | 0.6 | 0.01 | 0.04 | 4.15 | 1.49 | 2.32 | |
| 20 | 36.2 | 0.3 | 0.11 | 0.19 | 4.95 | 2.39 | 0.96 | |
| 21 | 39.1 | 0.4 | 0.08 | 0.08 | 1.83 | 3.50 | 2.29 | |
| 22 | 40.6 | 0.4 | 0.11 | 0.08 | 4.72 | 3.51 | 2.93 | |
| 23 | 40.8 | 0.4 | 0.03 | 0.11 | 2.93 | 3.68 | 2.16 | |
| 24 | 38.2 | 0.2 | 0.05 | 0.19 | 1.21 | 2.15 | 0.35 | |
| 25 | 40.4 | 0.5 | 0.01 | 0.20 | 1.51 | 4.35 | 1.32 | |
| 26 | 40.2 | 0.8 | 0.01 | 0.13 | 2.87 | 3.36 | 1.27 | |
| 27 | 41.0 | 0.8 | 0.11 | 0.11 | 2.58 | 1.23 | 2.80 | |
| 28 | 36.6 | 0.4 | 0.06 | 0.23 | 3.91 | 4.68 | 0.73 | |
| 29 | 35.3 | 0.3 | 0.07 | 0.05 | 0.54 | 1.02 | 4.68 | |
| 30 | 37.2 | 0.9 | 0.15 | 0.07 | 4.05 | 4.63 | 1.64 | |
| 31 | 40.7 | 0.8 | 0.02 | 0.19 | 3.55 | 2.36 | 1.05 | |
| 32 | 36.0 | 0.3 | 0.21 | 0.07 | 4.64 | 4.78 | 4.72 | |
| 33 | 36.4 | 0.9 | 0.11 | 0.07 | 4.84 | 3.12 | 2.49 | |
| 34 | 40.6 | 0.6 | 0.13 | 0.15 | 1.61 | 3.54 | 3.80 | |
| 35 | 35.8 | 0.6 | 0.03 | 0.19 | 3.33 | 2.15 | 3.18 | |
| 36 | 39.6 | 0.7 | 0.20 | 0.02 | 0.37 | 4.34 | 3.89 | |
| 37 | 35.5 | 0.5 | 0.15 | 0.13 | 1.76 | 4.41 | 0.52 | |
| 38 | 42.4 | 0.9 | 0.07 | 0.10 | 0.53 | 0.87 | 1.25 | |
| 39 | 40.0 | 0.6 | 0.12 | 0.12 | 0.74 | 0.41 | 0.99 | |
| 40 | 39.7 | 0.9 | 0.41 | 0.14 | 1.98 | 2.99 | 1.83 | |

**Table 6**

| Comparative alloy powder | Powder yield (%) | Defect rate (area%) | Corrosion resistance in wet environment (corrosion speed, mm/year) | | Corrosion resistance against halogen-based gas (area ratio of corroded parts, %) | | | Remarks |
|---|---|---|---|---|---|---|---|---|
| | | | 1% HCl | 35% HCl | Cl₂ | HBr | NF₃ | |
| 1 | 39.8 | 0.7 | 0.56 | 0.32 | 7.26 | 6.35 | 5.74 | |
| 2 | 36.2 | 0.3 | 0.53 | 0.33 | 7.36 | 7.23 | 8.32 | |
| 3 | 38.9 | 0.6 | 0.66 | 0.29 | 8.55 | 5.33 | 6.21 | |
| 4 | 41.6 | 1.4 | - | - | - | - | - | Many defects |
| 5 | 28.9 | 1.0 | - | - | - | - | - | Poor yield |
| 6 | 42.5 | 0.9 | 0.75 | 0.44 | 6.52 | 4.53 | 5.33 | |
| 7 | 27.5 | 0.4 | - | - | - | - | - | Poor yield |
| 8 | 28.1 | 0.6 | - | - | - | - | - | Poor yield |
| 9 | 40.2 | 0.5 | 0.23 | 0.11 | 5.67 | 3.28 | 4.44 | |
| 10 | 42.9 | 1.0 | 0.16 | 0.23 | 2.67 | 6.57 | 8.32 | |
| 11 | 39.1 | 0.6 | 0.17 | 0.21 | 3.88 | 5.78 | 5.99 | |
| 12 | 39.5 | 1.7 | - | - | - | - | - | Many defects |
| 13 | 41.5 | 0.5 | 0.08 | 0.02 | 5.48 | 3.29 | 6.66 | |
| 14 | 42.5 | 0.7 | 0.55 | 0.37 | 5.26 | 7.62 | 6.27 | |
| 15 | 36.1 | 1.4 | - | - | - | - | - | Many defects |
| 16 | 40.3 | 0.8 | 0.52 | 0.28 | 5.16 | 7.03 | 8.68 | |
| 17 | 36.4 | 1.6 | - | - | - | - | - | Many defects |
| 18 | 39.5 | 2.3 | - | - | - | - | - | Many defects |
| 19 | 40.9 | 1.2 | - | - | - | - | - | Many defects |
| 20 | 36.5 | 1.4 | - | - | - | - | - | Many defects |
| 21 | 40.7 | 0.8 | 0.09 | 0.16 | 5.78 | 6.32 | 6.47 | |
| 22 | 37.8 | 1.5 | - | - | - | - | - | Many defects |
| 23 | 28.8 | 0.7 | - | - | - | - | - | Poor yield |
| 24 | 23.7 | 0.6 | - | - | - | - | - | Poor yield |
| 25 | 39.9 | 1.3 | - | - | - | - | - | Many defects |
| 26 | 37.5 | 0.9 | 0.14 | 0.28 | 6.24 | 5.87 | 7.21 | |
| 27 | 37.9 | 1.4 | - | - | - | - | - | Many defects |
| 28 | 38.0 | 0.4 | 0.16 | 0.12 | 7.21 | 6.93 | 8.56 | |
| 29 | 36.6 | 1.3 | - | - | - | - | - | Many defects |
| 30 | 34.9 | 1.6 | - | - | - | - | - | Many defects |

As is clear from the results shown in Tables 5 and 6, the inventive Ni-based corrosion-resistant alloy powders for additive manufacturing were confirmed to be superior to the comparative Ni-based corrosion-resistant alloy powders for additive manufacturing and additive manufacturing products fabricated with the powders, in terms of any of production yields, defect rates of additive manufacturing product fabricated with produced powder, and corrosion resistance (wet environments, semiconductor process gas).

### INDUSTRIAL APPLICABILITY

Any member consisting of an additive manufacturing product for semiconductor production devices with excellent corrosion resistance and extremely few defects can be provided by using the Ni-based corrosion-resistant alloy powder according to the present invention as a raw material powder for additive manufacturing, and the Ni-based corrosion-resistant alloy powder according to the present invention is expected to be applicable not only to members for semiconductor production devices, but also as a corrosion-resistant metal powder for additive manufacturing of members of complex shape in a wide variety of fields, for example, in the fields of chemical plants, facilities for drug production, oil, and gas.

## Claims

1. A Ni-based corrosion-resistant alloy powder for additive manufacturing, consisting of a Ni-based alloy having a composition in mass% comprising:
14.5 to 24.0% of Cr;
12.0 to 23.0% of Mo;
0.01 to 7.00% of Fe;
0.001 to 2.500% of Co;
0.0001 to 0.0050% of Mg;
0.001 to 0.040% of N;
0.005 to 0.50% of Mn;
0.001 to 0.200% of Si;
0.01 to 0.50% of Al;
0.001 to 0.500% of Ti;
0.001 to 0.250% of Cu;
0.001 to 0.300% of V;
0.0001 to 0.0050% of B;
0.0001 to 0.0100% of Zr; and
0.0010 to 0.0300% of O;
optionally, more than 1.0% to 2.5% of Ta;
or optionally, 2.0 to 5.0% of W, and the balance of Ni with inevitable impurities, wherein the inevitable impurities comprises: less than 0.05% of C, less than 0.01% of S, and less than 0.01% of P.

2. The Ni-based corrosion-resistant alloy powder for additive manufacturing according to claim 1, wherein the composition of the Ni-based alloy comprises more than 1.0% to 2.5% of Ta.

3. The Ni-based corrosion-resistant alloy powder for additive manufacturing according to claim 1, wherein the composition of the Ni-based alloy comprises 2.0 to 5.0% of W

4. The Ni-based corrosion-resistant alloy powder for additive manufacturing according to any one of claims 1 to 3, wherein the Ni-based corrosion-resistant alloy powder for additive manufacturing has a powder particle size of 5 to 100 µm.

5. A method for producing an additive manufacturing product, comprising performing additive manufacturing by irradiating the Ni-based corrosion-resistant alloy powder for additive manufacturing according to any one of claims 1 to 4 as a raw material powder with a high-energy ray to selectively fuse the alloy powder.

6. A method for producing a member for semiconductor production devices, comprises performing additive manufacturing by irradiating the Ni-based corrosion-resistant alloy powder for additive manufacturing according to any one of claims 1 to 4 as a raw material powder with a high-energy ray to selectively fuse the alloy powder.

## Patentansprüche

1. Ni-basiertes korrosionsbeständiges Legierungspulver für additive Fertigung, bestehend aus einer Ni-basierten Legierung, die eine Zusammensetzung in Masse-% aufweist, umfassend:
14,5 bis 24,0 % Cr;
12,0 bis 23,0 % Mo;
0,01 bis 7,00 % Fe;
0,001 bis 2,500 % Co;
0,0001 bis 0,0050 % Mg;
0,001 bis 0,040 % N;
0,005 bis 0,50 % Mn;
0,001 bis 0,200 % Si;
0,01 bis 0,50 % Al;
0,001 bis 0,500 % Ti;
0,001 bis 0,250 % Cu;
0,001 bis 0,300 % V;
0,0001 bis 0,0050 % B;
0,0001 bis 0,0100 % Zr; und
0,0010 bis 0,0300 % O;
optional mehr als 1,0 % bis 2,5 % Ta;
oder optional 2,0 bis 5,0 % W, und der Rest Ni mit unvermeidlichen Verunreinigungen, wobei die unvermeidlichen Verunreinigungen Folgendes umfassen: weniger als 0,05 % C, weniger als 0,01 % S und weniger als 0,01 % P.

2. Ni-basiertes korrosionsbeständiges Legierungspulver für additive Fertigung nach Anspruch 1, wobei die Zusammensetzung der Ni-basierten Legierung mehr als 1,0 % bis 2,5 % Ta umfasst.

3. Ni-basiertes korrosionsbeständiges Legierungspulver für additive Fertigung nach Anspruch 1, wobei die Zusammensetzung der Ni-basierten Legierung 2,0 bis 5,0 % W umfasst.

4. Ni-basiertes korrosionsbeständiges Legierungspulver für additive Fertigung nach einem der Ansprüche 1 bis 3, wobei das Ni-basierte korrosionsbeständige Legierungspulver für additive Fertigung eine Pulverpartikelgröße von 5 bis 100 µm aufweist.

5. Verfahren zur Herstellung eines additiven Fertigungsprodukts, umfassend das Durchführen von additiver Fertigung durch Bestrahlen des Ni-basierten korrosionsbeständigen Legierungspulvers für additive Fertigung nach einem der Ansprüche 1 bis 4 als ein Rohmaterialpulver mit einem Hochenergiestrahl, um das Legierungspulver selektiv zu schmelzen.

6. Verfahren zur Herstellung eines Elements für Halbleiterherstellungsvorrichtungen, umfassend das Durchführen von additiver Fertigung durch Bestrahlen des Ni-basierten korrosionsbeständigen Legierungspulvers für additive Fertigung nach einem der Ansprüche 1 bis 4 als ein Rohmaterialpulver mit einem Hochenergiestrahl, um das Legierungspulver selektiv zu schmelzen.

## Revendications

1. Poudre d'alliage résistant à la corrosion à base de Ni pour fabrication additive, constituée d'un alliage à base de Ni présentant une composition en % massique comprenant :
14,5 à 24,0 % de Cr ;
12,0 à 23,0 % de Mo;
0,01 à 7,00 % de Fe;
0,001 à 2,500 % de Co ;
0,0001 à 0,0050 % de Mg ;
0,001 à 0,040 % de N ;
0,005 à 0,50 % de Mn ;
0,001 à 0,200 % de Si ;
0,01 à 0,50 % de Al;
0,001 à 0,500 % de Ti ;
0,001 à 0,250 % de Cu ;
0,001 à 0,300 % de V ;
0,0001 à 0,0050 % de B ;
0,0001 à 0,0100 % de Zr ; et
0,0010 à 0,0300 % de O ;
éventuellement, plus de 1,0 % à 2,5 % de Ta ;
ou éventuellement, 2,0 à 5,0 % de W, et
le reste étant du Ni avec des impuretés inévitables,
lesdites impuretés inévitables comprenant : moins de 0,05 % de C, moins de 0,01 % de S, et moins de 0,01 % de P.

2. Poudre d'alliage résistant à la corrosion à base de Ni pour fabrication additive selon la revendication 1, ladite composition d'alliage à base de Ni comprenant plus de 1,0 % à 2,5 % de Ta.

3. Poudre d'alliage résistant à la corrosion à base de Ni pour fabrication additive selon la revendication 1, ladite composition d'alliage à base de Ni comprenant 2,0 à 5,0 % de W.

4. Poudre d'alliage résistant à la corrosion à base de Ni pour fabrication additive selon l'une quelconque des revendications 1 à 3, ladite poudre d'alliage résistant à la corrosion à base de Ni pour fabrication additive présentant une taille de particule de poudre de 5 à 100 µm.

5. Procédé de production d'un produit de fabrication additive, comprenant la réalisation d'une fabrication additive en irradiant la poudre d'alliage résistant à la corrosion à base de Ni pour fabrication additive selon l'une quelconque des revendications 1 à 4 en tant que poudre de matière première avec un rayon haute énergie pour faire fondre de manière sélective la poudre d'alliage.

6. Procédé de production d'un élément pour dispositifs de production de semi-conducteur, comprenant la réalisation d'une fabrication additive en irradiant la poudre d'alliage résistant à la corrosion à base de Ni pour fabrication additive selon l'une quelconque des revendications 1 à 4 en tant que poudre de matière première avec un rayon haute énergie pour faire fondre de manière sélective la poudre d'alliage.
